# FASCICULE DE BREVET EUROPEEN

(11) **EP 0 424 276 B1**
(45) Date de publication et mention de la délivrance du brevet: **12.04.1995**
(21) Numéro de dépôt: 90402958.4
(22) Date de dépôt: 19.10.1990
(51) Int. Cl.: B60P 7/04

(54) **Perfectionnement aux parois souples extensibles**
Verbesserung an ausdehnbaren flexiblen Wänden
Improvement in extendable flexible walls

(30) Priorité: 19.10.1989 FR 8913949
(43) Date de publication de la demande: 24.04.1991
(73) Titulaire: BLOND-BAUDOIN, Société Anonyme, 44390 Nort-Sur-Erdre (FR)
(72) Inventeur: Lelez, Gilbert, F-44470 Carquefou (FR); Delouche, Daniel, F-44390 Nort Sur Erdre (FR)
(74) Mandataire: Phélip, Bruno

(56) Documents cités:
- DE-A- 3 049 566
- GB-A- 797 458
- GB-A- 2 041 304
- GB-A- 2 093 099

## Description

La présente invention concerne un perfectionnement aux parois souples extensibles et plus particulièrement aux parois latérales que l' on rencontre notamment sur des véhicules de transport du type comportant un toit relevable qui permet d'adapter le volume du véhicule à la charge transportée.

Des parois de ce type sont notamment décrites dans le document GB-A-797 458. Ce document présente une bâche extensible servant à protéger les chargements disposés sur des véhicules comme des plateformes de camions ; le volume desdits chargements pouvant varier entre une limite maximale et une limite minimale prédéterminée. Cette bâche extensible comporte un panneau vertical de dimensions déterminées et une rallonge escamotable, développable à volonté. Cette bâche est maintenue, depuis sa partie supérieure au moyen d'organes élastiques d'amarrage qui coulissent dans des manches. Lorsque la rallonge est repliée à l'intérieur, sur le panneau principal, elle est agrafée à ce panneau principal au moyen de dispositifs à pressions mâle et femelle.

Une telle bâche est réglable en différentes positions pour s'adapter au chargement.

L'opération qui consiste à replier et à agrafer la rallonge escamotable est difficile à réaliser surtout lorsqu'il y a peu d'espace entre le chargement et le panneau principal.

La présente invention a pour objet une bâche formant une paroi extensible également, qui offre cependant la possibilité de s'adapter à toutes les longueurs possibles entre un maximum et un minimum.

L'invention permet également d'obtenir une paroi parfaitement plane sans pliure ou fronce d'aspect désagréable.

La paroi souple selon l'invention se présente sous la forme d'un rideau coulissant obturant un côté d'un véhicule de transport du type de celui décrit dans le document FR-A-2 577 865. Cette paroi comporte des organes élastiques disposés dans le sens de l'allongement de la bâche ; ces organes élastiques sont fixés sur la toile de la bâche, au moins en deux points qui sont espacés, sur ladite toile, d'une longueur au moins égale à la différence entre la dimension maximale et la dimension minimale de la paroi la capacité d'allongement desdits organes élastiques est elle aussi au moins égale à cette différence. Cette disposition permet la formation automatique d'un pli à la partie inférieure de la bâche, entre les deux points de fixation des organes élastiques, lequel pli absorbe les variations de dimension de la paroi.

Selon une disposition préférentielle de l'invention, la paroi comporte des organes élastiques en forme de sangles, qui s'étendent à la partie supérieure de la toile de ladite paroi, jusqu'à sa partie inférieure, laquelle partie inférieure comporte des moyens d'accrochage coopérant avec la rive du plancher du véhicule.

Selon une autre disposition de l'invention, la paroi comporte des organes élastiques qui s'étendent dans des goussets aménagés à partir de la partie supérieure de la paroi, sur une longueur sensiblement inférieure à la dimension minimale de ladite paroi.

Toujours selon l'invention, la bordure inférieure de la paroi, comporte, dans le prolongement des organes élastiques, une poignée facilitant la tension et l'accrochage de ladite partie inférieure sur la rive du véhicule.

L'invention sera encore illustrée à l'aide de la description suivante et des dessins annexés donnés à titre indicatif, et dans lesquels :
- la figure 1 illustre une portion de paroi souple, vue de l'intérieur du véhicule, laquelle paroi est dans une position de dimensions maxima, c'est-à-dire totalement développée ;
- la figure 2 est une vue en coupe selon A de la figure 1, montrant la paroi souple en position sur un véhicule partiellement esquissé, avec une section agrandie montrant un fourreau ;
- la figure 3 illustre une portion de la paroi souple, toujours vue de l'intérieur, montrant sa dimension minimale ;
- la figure 4 est une coupe selon A de la figure 3 ;
- la figure 5 illustre une portion de la paroi souple dans une position intermédiaire entre ses dimensions maximale et minimale ;
- la figure 6 est une vue en coupe selon A de la figure 5.

Telle que représentée sur les figures, la paroi est constituée d'une toile souple 1 suspendue au moyen de chariots à galets 2 dans un rail 3 disposé en bordure du toit 4 du véhicule. On remarque, sur les figures, des sangles 5 qui s'étendent verticalement à l'intérieur et/ou a l'extérieur de la toile 1, partant des chariots 2, pour la renforcer.

Les chariots 2 sont généralement espacés de 50 cm environ.

On remarque, sur la face interne de la toile 1, des organes élastiques 6 en forme de sangles ou de sandows, fixés par tous moyens appropriés à leur partie supérieure 7 au niveau du rebord supérieur 8 de la toile 1 et à leur partie inférieure 9, à proximité du rebord inférieur 10 de ladite toile 1. On remarque, dans le prolongement de chaque organe élastique 6, à la partie inférieure de la toile 1, un dispositif d'accrochage en forme de crochet 11 fixé au moyen d'une sangle 12 près de la bordure inférieure 10 de la paroi. Ce crochet 11 est prévu pour s'agripper sous la rive 13 du plancher 14 du véhicule. La sangle 12 est une sangle non extensible fixée sur la bande longitudinale inférieure 15 de la toile 1.

L'organe élastique 6 est positionné, de préférence, dans un fourreau 16 de protection, à l'intérieur duquel il est libre en coulissement vertical. La hauteur de ce fourreau 16 est sensiblement inférieure à la dimension minimale de la paroi.

La capacité d'allongement des organes élastiques 6 est au moins égale à la différence de hauteur du toit en position abaissée et relevée.

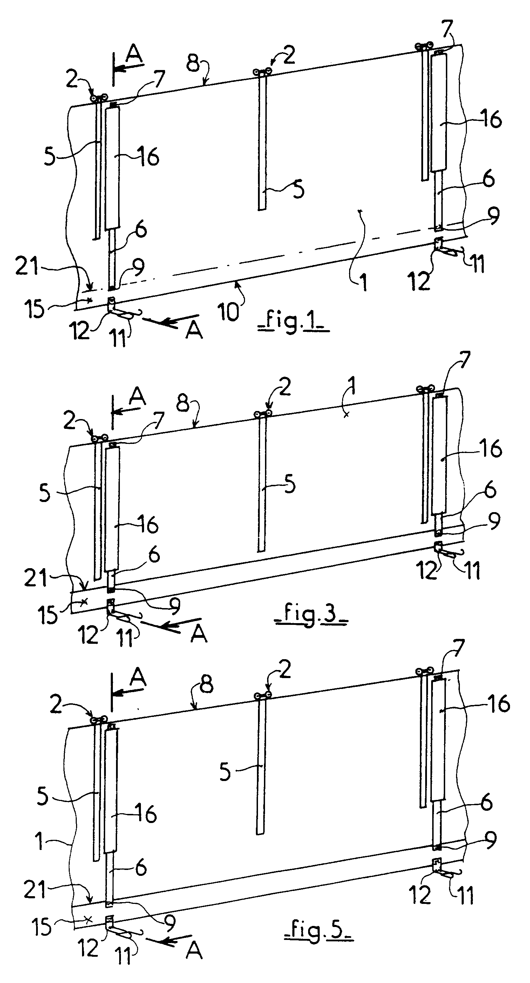

Cette dimension minima de la paroi est représentée figure 3. En effet, sur cette figure, et sur la figure 4 notamment, on remarque que la partie inférieure de la toile 1 forme un pli 17 qui s'étend longitudinalement et qui est apparent sur la face interne de la paroi. La face externe de la paroi est parfaitement lisse comme on peut le remarquer figure 4.

L'organe élastique 6 exerce une traction entre son point d'ancrage 7 situé à la bordure supérieure 8 de la toile et son ancrage 9 situé à la partie inférieure de ladite toile. L'ancrage inférieur de l'organe élastique 6 est maintenu dans une position fixe constante, au moyen du crochet 11 fixé à la rive 13. La bande longitudinale inférieure 15 de la toile 1 qui s'étend de la bordure 10 jusqu'au niveau des ancrages 9 de l'organe élastique 6, reste dans une position fixe par rapport à la rive 13, laquelle position résulte de celle des crochets 11 fixés à leur sangle 12. Une poignée 22 est disposée sur la sangle 12, au-dessus du crochet 11, pour permettre à l' opérateur d'exercer plus facilement une tension sur la sangle 6 pour la mise en place dudit crochet 11 sous la rive 13.

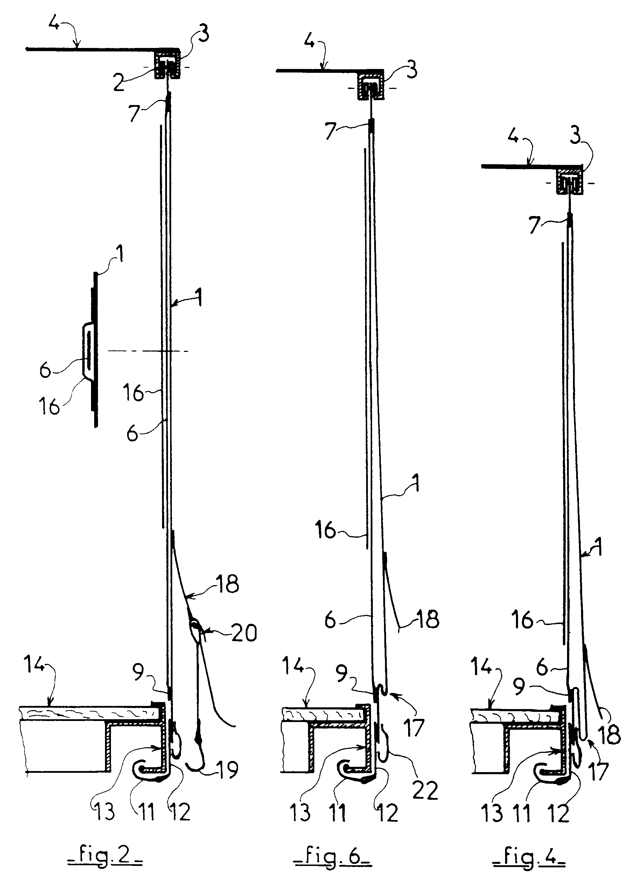

Lorsque la partie supérieure 8 de la paroi s'élève, le pli 17, figure 4, se réduit, comme il apparait figure 6 et disparait totalement figure 2, lorsque le toit 4 a atteint sa position relevée maximale.

La tension verticale sur la toile 1 est réalisée au moyen de sangles 18 aux extrémités desquelles on trouve un crochet 19 qui coopère avec la rive 13 également. Une boucle 20 permet de régler la longueur et la tension des sangles 18, qui, généralement, sont fixées à l'extrémité inférieure des sangles 5, à l'extérieur de la toile 1. On obtient ainsi une paroi souple parfaitement plane et surtout sans pliure inesthétique à la partie inférieure. Le pli 17 se réalise automatiquement sous le niveau 21 de la bande longitudinale 15, du simple fait du poids de la toile. Ce niveau 21 apparaît sur la face interne de la paroi, figures 3 à 6.

Les organes élastiques 6 sont répartis tous les mètres environ sur la longueur de la paroi. Ils peuvent être disposés verticalement sous les chariots à galets 2, c'est-à-dire en doublage des sangles 5, pour éviter la formation de plis sur la toile 1.

Ces sangles 6 constituent un dispositif qui permet de régler les dimensions de la toile afin de l'adapter aux différentes positions du toit 4 du véhicule.

Il faut également noter que la paroi comporte un double accrochage : un accrochage au moyen des sangles classiques réglables 18, qui réalisent la tension verticale de la toile 1 à l'aide des sangles 5, et un accrochage souple par les organes élastiques 6 qui maintiennent la toile 1 grâce aux fourreaux de protection 16.

La tension de la sangle 18, s'exerce sur la toile 1 au-dessus du pli 17 ; cette sangle 18 est fixée à l'extérieur de la toile au niveau de l'extrémité inférieure du fourreau 16.

Les signes de référence insérés après les caractéristiques techniques mentionnées dans les revendications ont pour seul but de faciliter la compréhension de ces dernières et n'en limitent aucunement la portée.

## Revendications

1. Paroi souple en forme de toile s'étendant entre le toit et le plancher d'un véhicule ou autre du type à toit rehaussable, laquelle paroi est extensible par développement de la toile entre une dimension maximale et une dimension minimale pour s'adapter aux différentes positions dudit toit par rapport au plancher, caractérisée en ce qu'elle comporte des organes élastiques (6) qui s'étendent dans le sens d'extension de ladite toile (1), et qui possèdent une capacité d'allongement au moins égale à la différence entre les dimensions maximales et minimales de la paroi, lesquels organes élastiques (6) sont fixés sur ladite toile en deux points au moins qui sont espacés d'une distance au moins égale à ladite différence.

2. Paroi souple selon la revendication 1, caractérisée en ce qu'elle comporte des organes élastiques (6) en forme de sangles, qui s'étendent de la partie supérieure (8) de la toile (1) jusqu'à sa partie inférieure (10), laquelle partie inférieure comporte des moyens d'accrochage (11) coopérant avec la rive (13) du plancher (14) du véhicule.

3. Paroi souple selon l'une quelconque des revendications 1 ou 2, caractérisée en ce qu'elle comporte des organes élastiques (6) guidés dans des fourreaux (16) qui s'étendent depuis la partie supérieure (8) de la toile (1) sur une longueur inférieure ou égale à la dimension minimale de ladite toile (1).

4. Paroi souple selon l'une quelconque des revendications 1 à 3, caractérisée en ce qu'elle comporte, à la partie inférieure de la toile (1), dans le prolongement des organes élastiques (6), des poignées (22) permettant d'exercer une traction sur ladite partie inférieure de la toile.

5. Paroi souple selon la revendication 2, caractérisée en ce qu'elle comporte des moyens d'accrochage de la partie inférieure de la toile (1) constitués d'une sangle (12) à l'extrémité de laquelle est disposé un crochet (11).

6. Paroi souple selon la revendication 5, caractérisée en ce qu'elle comporte des organes élastiques (6) qui s'étendent depuis un point d'ancrage (7) situé à proximité de la bordure supérieure (8) de la toile, jusqu'à un ancrage (9) situé à proximité de la bordure inférieure de ladite toile (1).

7. Paroi souple selon l'une quelconque des revendications 2 à 6, caractérisée en ce qu'elle comporte des organes élastiques (6) ancrés à la partie supérieure de la toile (1) à proximité des chariots de guidage (2) de cette toile (1).

8. Paroi souple selon la revendication 5, caractérisée en ce qu elle comporte des moyens d'accrochage constitués d'une sangle (12) non extensible.

9. Paroi souple selon l'une quelconque des revendications 3 à 8, caractérisée en ce qu elle comporte des sangles (18) de tension verticale, ancrées à la partie inférieure des fourreaux (16) de guidage des organes élastiques (6).

## Claims

1. Flexible wall in the shape of a cloth stretched between the roof and the floor of a vehicle or equivalent with a raisable roof, the said wall being extendible by stretching the cloth between a maximum dimension and a minimum dimension in order to suit the various positions of the said roof with respect to the floor, characterised in that it comprises elastic devices (6) stretching in the extension direction of the said cloth (1) and which possess an elongation capacity at least equal to the difference between the maximum and minimum sizes of the wall, whereby the said elastic devices (6) are fixed on the said cloth in two points at least which are separated by a distance at least equal to the said difference.

2. Flexible wall according to claim 1, characterised in that it comprises elastic devices (6) in the form of straps, which run from the upper section (8) of the cloth (1) to its lower section (10), the said lower section comprising fastening means (11) working together with the edge (13) of the floor (14) of the vehicle.

3. Flexible wall according to any one of claims 1 or 2, characterised in that it contains elastic devices (6) guided in scabbards (16) running from the upper section (8) of the cloth (1) over a length equal to or less than the minimum size of the said cloth (1).

4. Flexible wall according to any one of claims 1 to 3, characterised in that it contains, in the lower section of the cloth (1), in the prolongation of the elastic devices (6) handles (22) enabling to exert a pulling action on the said lower section of the cloth.

5. Flexible wall according to claim 2, characterised in that it contains fastening means of the lower section of the cloth (1) made of a strap (12) at the end of which a hook (11) has been provided.

6. Flexible wall according to claim 5, characterised in that it contains elastic devices (6) running from an anchoring point (7) located close to the upper rim (8) of the cloth, to an anchor (9) located close to the lower rim of the said cloth (1).

7. Flexible wall according to any one of claims 2 to 6, characterised in that it contains elastic devices (6) anchored to the upper section of the cloth (1) close to the guiding saddles (2) of this cloth (1).

8. Flexible wall according to claim 5, characterised in that it contains fastening means made of a strap (12) which is not extendible.

9. Flexible wall according to any one of claims 3 to 8, characterised in that it contains straps (18) for vertical tightening, anchored to the lower section of the scabbards (16) for guiding the elastic devices (6).

## Patentansprüche

1. Flexible Wand in Form eines Vorhangs, der sich zwischen dem Dach und dem Boden eines Fahrzeugs od.dgl. mit einem anhebbaren Dach erstreckt, wobei die genannte Wand durch Abwicklung des Vorhangs zwischen einer Maximaldimension und einer Minimaldimension ausdehnbar ist, um sich an die verschiedenen Positionen des Dachs bezüglich des Fußbodens anzupassen, dadurch gekennzeichnet, daß sie elastische Organe (6) umfaßt, die sich in Richtung der Ausdehnung des genannten Vorhangs (1) erstrecken und die eine Fähigkeit sich zu verlängern haben, die wenigstens gleich der Differenz zwischen den Maximal- und Minimalabmessungen der Wand ist, wobei die elastischen Organe (6) am besagten Dach wenigstens an zwei Punkten befestigt sind, die voneinander um wenigstens die genannte Differenz beabstandet sind.

2. Flexible Wand nach Anspruch 1, dadurch gekennzeichnet, daß sie elastische Organe (6) in Form von Gurten umfaßt, die sich vom oberen Abschnitt (8) der Wand (1) bis zu ihrem unteren Abschnitt (10) erstrecken und wobei der untere Abschnitt Einhakeinrichtungen (11) umfaßt, die mit der Randkante (13) des Fußbodens (14) des Fahrzeugs zusammenwirken.

3. Flexible Wand nach Anspruch 1 oder 2, dadurch gekennzeichnet, daß sie elastische Organe (6) umfaßt, die in einer Scheide (16) geführt sind, die sich bis zum oberen Abschnitt (8) des Vorhangs (1) über eine Länge erstreckt, die kleiner oder gleich der Minimaldimension des genannte Vorhangs (1) ist.

4. Flexible Wand nach einem der Ansprüche 1 bis 3, dadurch gekennzeichnet, daß sie am unteren Ende des Vorhangs (1) in Verlängerung der elastischen Organe (6) Griffe (22) umfaßt, welche es ermöglichen, einen Zug auf den genannten unteren Abschnitt des Vorhangs auszuüben.

5. Flexible Wand nach Anspruch 2, dadurch gekennzeichnet, daß sie Einhakeinrichtungen für den unteren Abschnitt des Vorhangs (1) aufweist, die gebildet sind durch einen Gurt (12), an dessen Ende ein Haken (11) angeordnet ist.

6. Flexible Wand nach Anspruch 5, dadurch gekennzeichnet, daß sie elastische Organe (6) umfaßt, die sich von einem Verankerungspunkt (7) in der Nähe des oberen Randes (8) des Vorhangs bis zu einer Verankerung (9) in der Nähe des unteren Randes des genannten Vorhangs (1) erstrecken.

7. Flexible Wand nach einem der Ansprüche 2 bis 6, dadurch gekennzeichnet, daß sie elastische Organe (6) umfaßt, die am oberen Abschnitt des Vorhangs (1) in der Nähe der Führungsschlitten (2) für diesen Vorhang (1) verankert sind.

8. Flexible Wand nach Anspruch 5, dadurch gekennzeichnet, daß sie Verankerungsmittel umfaßt, die aus einem nichtdehnbaren Gurt bestehen.

9. Flexible Wand nach einem der Ansprüche 3 bis 8, dadurch gekennzeichnet, daß sie Gurte (18) zur vertikalen Spannung umfaßt, die am unteren Abschnitt der Scheide (16) zur Führung der elastischen Organe (6) befestigt sind.
